Europäisches Patentamt

European Patent Office

Office européen des brevets

(11) Veröffentlichungsnummer : **0 155 447**
**B1**

(12) # EUROPÄISCHE PATENTSCHRIFT

(45) Veröffentlichungstag der Patentschrift :
19.08.87

(51) Int. Cl.⁴ : **H 04 N 9/84**

(21) Anmeldenummer : 85100329.3

(22) Anmeldetag : 15.01.85

(54) **Videorecorder mit Verringerung des Bildübersprechens.**

(30) Priorität : 08.02.84 DE 3404326

(43) Veröffentlichungstag der Anmeldung :
25.09.85 Patentblatt 85/39

(45) Bekanntmachung des Hinweises auf die Patenterteilung : 19.08.87 Patentblatt 87/34

(84) Benannte Vertragsstaaten :
AT BE CH DE FR GB IT LI LU NL SE

(56) Entgegenhaltungen :
GB-A- 2 021 897
US-A- 4 165 518

(73) Patentinhaber : Deutsche Thomson-Brandt GmbH
Hermann-Schwer-Strasse 3 Postfach 2060
D-7730 Villingen-Schwenningen (DE)

(72) Erfinder : Kluth, Hans-Jürgen
Weichselstrasse 11
D-7730 Villingen-Schwenningen (DE)

## Beschreibung

Bei Videorecordern wird das BAS-Signal durch Frequenzmodulation eines Bildträgers auf Schrägspuren des Magnetbandes aufgezeichnet. Dabei entfällt jeweils auf eine Schrägspur ein Halbbild. Der Wert der Synchronimpulse entspricht dabei z. B. 3,6 MHz und der Weißwert 4,8 MHz des frequenzmodulierten Bildträgers. Die Aufzeichnung erfolgt dabei in der Weise, daß die Zeilensynchronimpulse benachbarter Schrägspuren nebeneinander liegen. Wenn daher bei der Abtastung der Videokopf durch Übersprechen auch das Signal der benachbarten Spur abtastet, entspricht dieses Signal dem gleichen Bildpunkt des vorangehenden Halbbildes, wobei auch die von der abgetasteten Spur und die durch Übersprechen von der Nachbarspur abgetasteten Synchronimpulse zeitlich zusammenfallen. Durch diese Maßnahme wird das Übersprechen verringert.

Das Übersprechen zwischen benachbarten Spuren wird außerdem dadurch verringert, daß die Kopfspalte der beiden Videoköpfe, die das Videosignal von Halbbild zu Halbbild abwechselnd auf den Schrägspuren aufzeichnen, um entgegengesetzte Winkel von etwa + 7° zur Querrichtung der Spuren versetzt sind. Dadurch wird eine zusätzliche Übersprechdämpfung durch Ausnutzung der sogenannten Azimutverluste erreicht.

Es gibt indessen Videorecorder, bei denen die genannte Zuordnung der Signale benachbarter Schrägspuren nicht gegeben ist. Dort liegen z. B. die Zeilensynchronimpulse einer Spur in der Zeilenmitte des Signals der benachbarten Spur. Dies ist z. B. der Fall bei Videorecordern im Langspielbetrieb, dem sogenannten LP-Betrieb (Long Play). Auch bei Recordern nach dem sogenannten 8 mm-Video-System liegen die Zeilensynchronimpulse benachbarter Schrägspuren um etwa 1/2 Zeilendauer gegeneinander versetzt. Bei einer derartigen Aufzeichnung ist also die genannte Korrelation der Signale zwischen nebeneinanderliegenden Spuren nicht mehr gegeben. Durch Übersprechen bei der Abtastung können dann z. B. die Synchronimpulse der benachbarten Spur in Form eines senkrechten dunklen Balkens sichtbar werden. Bei einem aus der US-PS 41 65 518 bekannten Videorecorder der im Oberbegriff des Patentanspruchs 1 genannten Art wird zur Verringerung derartiger Störungen die Trägerfrequenz von Spur zu Spur um ein ungeradzahliges Vielfaches der halben Zeilenfrequenz verschoben. Der Erfindung liegt die Aufgabe zugrunde, Störungen im Bild durch Übersprechen bei einer Aufzeichnung bei der die Zeilensynchronimpulse benachbarter Spuren nicht nebeneinander liegen, zu verringern.

Diese Aufgabe wird durch die im Anspruch 1 beschriebene Erfindung gelöst. Vorteilhafte Weiterbildungen sind in den Unteransprüchen beschrieben.

Bei der erfindungsgemäßen Lösung wird also die Zuordnung der einzelnen Amplitudenwerte des BAS-Signals zu den Frequenzwerten des damit frequenzmodulierten Bildträgers von Spur zu Spur, d. h. von Halbbild zu Halbbild, bewußt umgepolt, so daß z. B. der Synchronimpuls bei einer Spur dem Frequenzwert 3,6 MHz und in der nächsten Spur dem Frequenzwert 4,8 MHz des modulierten Bildträgers entspricht. Hierzu kann z. B. die Modulationskennlinie des FM-Modulators von Spur zu Spur umgeschaltet werden. Vorzugsweise wird das BAS-Signal dem FM-Modulator während jeder zweiten Spur über einen Inverter zugeführt, der die Polarität des BAS-Signals umpolt. Wenn z. B. ein Videokopf eine Spur n abtastet und die Synchronimpulse des abgetasteten BAS-Signals im Ultraschwarzwert liegen, erstrecken sich die Synchronimpulse des durch Übersprechen aus der benachbarten Spur abgetasteten Signals bis zum Weißwert. Der dadurch an sich entstehende senkrechte Balken wird dadurch wesentlich weniger störend sichtbar als der ohne die Erfindung auftretende dunkle Balken. Durch die genannte Dämpfung aufgrund des Azimutwinkels, die zu höheren Frequenzen des Bildträgers hin ansteigt, werden die sich bis zum Weißwert erstreckenden, also bei hohen Frequenzen des Bildträgers liegenden Synchronimpulse kaum noch sichtbar. Die Interferenzen auf vertikalen Bildkanten werden ebenfalls stark verringert, weil die Differenzfrequenz zwischen benachbarten Bildteilen höher sind und auch nicht mehr korreliert sind.

Die Erfindung wird anhand der Zeichnung näher erläutert. Darin zeigen

Figur 1 ein Blockschaltbild für die Aufnahme,

Figur 2 ein Diagramm zur Erläuterung der erfindungsgemäßen Modulation und

Figur 3 ein Blockschaltbild für die Wiedergabe.

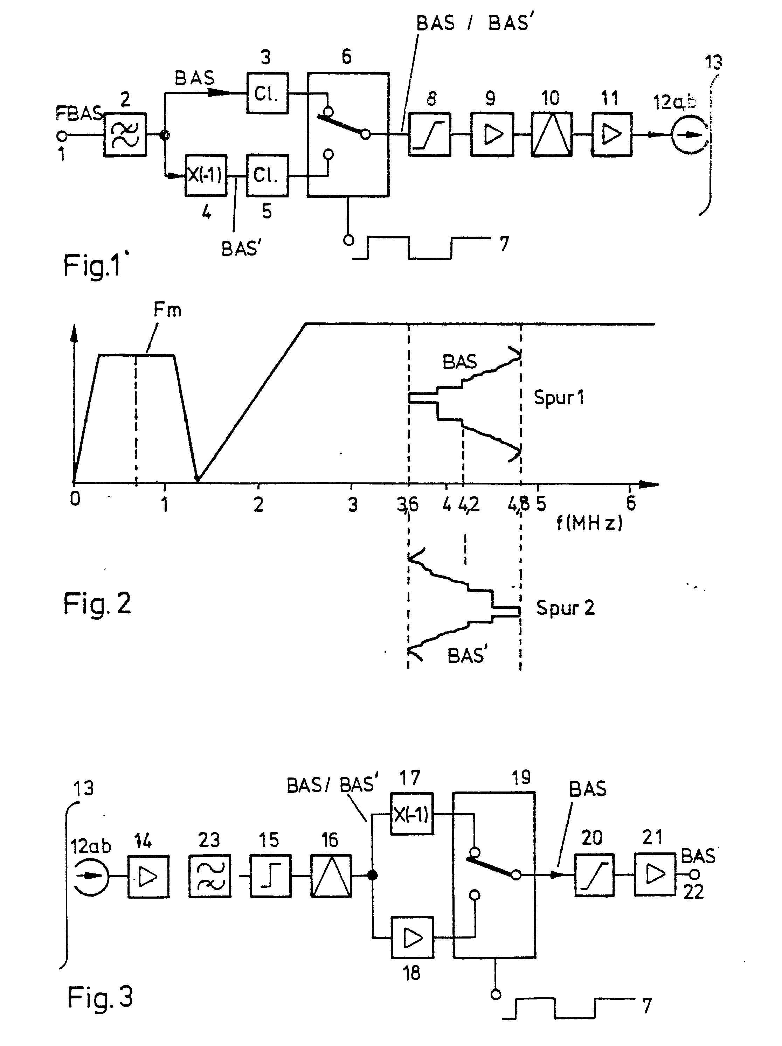

In Fig. 1 wird aus dem an der Klemme 1 stehenden FBAS-Signal mit dem Tiefpaß 2 mit einer Grenzfrequenz von etwa 3,0 MHz das BAS-Signal gewonnen. Das DAS-Signal gelangt einmal über die Klemmstufe 3 und zum anderen über den in Inverter 4 und die Klemmstufe 5 auf die beiden Eingänge des Umschalters 6, der durch die vom Kopfrad abgeleiteten Kopfwechselimpulse 7 mit einer Frequenz von 25 Hz zu Beginn jedes Halbbildes betätigt wird. Das BAS-Signal gelangt somit mit einer von Halbbild zu Halbbild umgeschalteten Polarität über die nichtlineare Preemphasisstufe 8 und den Verstärker 9 auf den FM-Modulator 10, der den mit dem BAS-Signal frequenzmodulierten Bildträger erzeugt. Dieser gelangt über den Verstärker 11 auf die beiden Videoköpfe 12a, b, die den modulierten Bildträger von Halbbild zu Halbbild auf Schrägspuren des Magnetbandes 13 aufzeichnen.

Fig. 2 zeigt die von Halbbild zu Halbbild umgeschaltete Frequenzmodulation. Im Bereich von etwa 0 bis 1,5 MHz ist der in der Frequenz herabgesetzte, modifizierte Farbträger FM aufgezeichnet. Die Schaltungsmittel dafür sind in Fig. 1 nicht dargestellt. Oberhalb des Farbträgers Fm ist der modulierte Bildträger aufgezeichnet. Während der Spur 1 erfolgt die Modulation in dem FM-Modulator 10 durch Signal BAS derart, daß der Synchronimpuls dem Frequenzwert von 3,6 MHz und der Weißwert den Frequenzwert 4,8 MHz des modulierten Bildträgers entspricht. Dieses ist die an sich übliche, in jeder Spur gleichbleibend angewendete Modulation.

Während jeder zweiten Spur ist das Signal BAS durch den Schalter 6 in das Signal BAS' umgepolt, so daß nun die Synchronimpulse bei der Frequenz 4,8 MHz des Bildträgers liegen.

In Fig. 3 wird das Signal mit den Videoköpfen 12a, b wieder von dem Magnetband 13 abgetastet und über den Verstärker 14, den Hochpaß 23 mit einer Grenzfrequenz von 1,5 MHz und den Begrenzer 15 dem FM-Demodulator 16 zugeführt. Dieser liefert von Spur zu Spur und damit von Halbbild zu Halbbild abwechselnd das Signal BAS und BAS'. Dieses Signal wird einmal über den Inverter 17 und zum anderen über den Verstärker 18 dem Umschalter 19 zugeführt. Der Hochpaß 23 dient dazu, den quadraturmodulierten Farbträger F, der unterhalb des Frequenzspektrums des Bildträgers bei einer Frequenz von etwa 630 kHz aufgezeichnet ist, zu unterdrücken. Der Umschalter 19 ist durch die Schaltspannung 7 ebenso wie der Schalter 6 in Fig. 1 zu Beginn jedes Halbbildes umgeschaltet. In der dargestellten Schalterstellung wird daher das Signal BAS' wieder in das Signal BAS umgewandelt. Dadurch entsteht am Ausgang des Umschalters 19 wieder in erwünschter Weise ständig das Signal BAS mit gleicher Polarität. Dieses Signal gelangt über die nichtlineare Deemphasisstufe 20 und den Verstärker 21 auf die Ausgangsklemme 22 und steht dort für die Bildwiedergabe oder die Kombination mit dem Farbträger F zur Verfügung.

Die Schaltung mit den Bauteilen 4, 6 in Fig. 1 und die Schaltung mit den Bauteilen 17, 18, 19 in Fig. 3 kann durch dieselbe Schaltung realisiert sein, die dann sowohl bei der Aufnahme als auch bei der Wiedergabe wirksam ist. Dies ist möglich, weil in beiden Fällen die Schaltung eine Umpolung des BAS-Signals jeweils zu Beginn eines Halbbildes bewirkt.

## Patentansprüche

1. Videorecorder mit Verringerung des Bildübersprechens zwischen benachbarten Spuren, bei dem das BAS-Signal aufeinanderfolgender Halbbilder durch Frequenzmodulation eines Bildträgers auf Schrägspuren des Magnetbandes (13) aufgezeichnet wird und die Zuordnung der Amplitudenskala des BAS-Signals zu der Frequenzskala des Bildträgers von Spur zu Spur geändert ist, dadurch gekennzeichnet, daß die Zuordnung der Amplitudenskala des BAS-Signals zu der Frequenzskala des Bildträgers von Spur zu Spur umgepolt ist.

2. Recorder nach Anspruch 1, dadurch gekennzeichnet, daß bei der Aufnahme das BAS-Signal dem Frequenzmodulator (10) während jeder zweiten Spur über einen Inverter (4) zugeführt ist.

3. Recorder nach Anspruch 1, dadurch gekennzeichnet, daß bei der Wiedergabe das von dem Frequenzmodulator (16) erzeugte BAS-Signal während jeder zweiten Spur über einen Inverter (17) geführt ist.

4. Recorder nach Anspruch 3, dadurch gekennzeichnet, daß die Einschaltung des Inverters (17) mit dem Kopfwechselimpuls (7) erfolgt, der den Weg des BAS-Signals zu Beginn jedes Halbbildes zwischen zwei abwechselnd das Magnetband (13) abtastenden Videoköpfen (12a, b) umschaltet.

5. Recorder nach Anspruch 2 und 3, dadurch gekennzeichnet, daß die Invertierung bei der Aufnahme und die entgegengesetzte Invertierung bei der Wiedergabe mit derselben Schaltung erfolgen.

## Claims

1. A video recorder with reduction of the crosstalk between adjacent tracks, wherein the composite video signal of successive fields is recorded, by frequency modulation of an image carrier, on oblique tracks of the magnetic tape (13) and the correlation between the amplitude scale of the composite video signal and the frequency scale of the image carrier is altered from one track to the next, characterised in that the correlation between the amplitude scale of the composite video signal and the frequency scale of the image carrier is reversed in polarity from one track to the next.

2. A recorder according to Claim 1, characterised in that, during the recording, the composite video signal is fed to the frequency modulator (10) through an inverter (4) during every other track.

3. A recorder according to Claim 1, characterised in that, during the reproduction, the composite video signal produced by the frequency modulator (16) is conveyed through an inverter (17) during every other track.

4. A recorder according to Claim 3, characterised in that the switching on of the inverter (17) is effected by the head-change pulse (7) which at the beginning of each field, switches over the path of the composite video signal between two video heads (12a, b), scanning the magnetic tape (13) alternately.

5. A recorder according to Claims 2 and 3, characterised in that the inverting during the recording and the opposite inverting during the reproduction are effected by the same circuit.

## Revendications

1. Magnétoscope où la diaphonie d'image entre pistes adjacentes est réduite et dans lequel le signal BAS (vidéo composite) de trames successives est enregistré, par modulation de fréquence d'une porteuse-image, sur les pistes inclinées de la bande magnétique (13) et où la relation entre l'échelle d'amplitudes du signal BAS et l'échelle de fréquences de la porteuse-image est modifiée de piste en piste, caractérisé en ce que la relation entre l'échelle d'amplitudes du signal BAS et l'échelle de fréquences de la porteuse-image est inversée de piste en piste.

2. Magnétoscope selon la revendication 1, caractérisé en ce que, lors de l'enregistrement, le signal BAS est appliqué au modulateur de fréquence (10) toutes les secondes pistes par l'intermédiaire d'un inverseur (4).

3. Magnétoscope selon la revendication 1, caractérisé en ce que, lors de la reproduction, le signal BAS produit par le modulateur de fréquence (16) passe dans un inverseur (17) toutes les secondes pistes.

4. Magnétoscope selon la revendication 3, caractérisé en ce que l'enclenchement de l'inverseur (17) est effectué par l'impulsion d'alternance de têtes (7), qui fait commuter le trajet du signal BAS au début de chaque trame, entre deux têtes vidéo (12a, b) analysant alternativement la bande magnétique (13).

5. Magnétoscope selon les revendications 2 et 3, caractérisé en ce que l'inversion lors de l'enregistrement et l'inversion opposée lors de la reproduction sont effectuées avec le même circuit.

Fig.1

Fig. 2

Fig. 3